# FASCICULE DE BREVET EUROPEEN

(11) **EP 0 520 374 B1**
(45) Date de publication et mention de la délivrance du brevet: **29.03.1995**
(21) Numéro de dépôt: 92110565.6
(22) Date de dépôt: 23.06.1992
(51) Int. Cl.: F17C 13/00, H01F 6/00, H02G 15/34

(54) **Structure pour amenée de courant destinée à une installation fonctionnant à très basse température**
Elektrische Stromleiterstruktur für eine bei sehr niedrigen Temperaturen arbeitende Einrichtung
Structure for conducting electric current to an installation working at a very low temperature

(30) Priorité: 27.06.1991 FR 9107967
(43) Date de publication de la demande: 30.12.1992
(73) Titulaire: GEC ALSTHOM SA, 75116 Paris (FR)
(72) Inventeur: Herrmann, Peter, F-91410 Corbreuse (FR); Verhaege, Thierry, F-91160 Saulx Les Chartreux (FR); Cottevieille, Christian, F-93100 Montreuil (FR)
(74) Mandataire: Weinmiller, Jürgen

(56) Documents cités:
- FR-A- 2 637 728
- GB-A- 2 212 983
- CRYOGENICS. vol. 24, no. 2, Février 1984, GUILDFORD GB pages 73 - 82 J.GERHOLD'Design criteria for high voltage leads for superconducting power systems'
- PATENT ABSTRACTS OF JAPAN vol. 8, no. 155 (E-256)(1592) 19 Juillet 1984 & JP-A-59 058 884

## Description

La présente invention concerne une structure pour amenée de courant destinée à une installation fonctionnant à très basse température.

L'utilisation des supraconducteurs ou des hyperconducteurs à très basse température (par exemple à 4.2 K, température de l'hélium liquide) demande que le courant soit conduit par des amenées de courant de la zone à température ambiante (300 K) à la zone à très basse température.

En général les amenées de courant sont réalisées à l'aide de conducteurs métalliques, éventuellement refroidis par les vapeurs du fluide cryogénique.

Les besoins cryogéniques qui en résultent sont importants, et ne peuvent être réduits en-dessous d'une certaine limite, à cause du lien existant pour un métal entre les conductivités électrique et thermique (loi de Wiedemann Franz). Ainsi une amenée de courant en cuivre, fonctionnant entre 4.2 K et 300 K, optimisée pour 1000 A, dissipe 1W dans l'hélium, et utilise les vapeurs produites pour son refroidissement. La charge de refroidissement et liquéfaction de ces vapeurs est alors de l'ordre de 3 KW électriques.

Après l'apparition des céramiques supraconductrices à haute température critique (ex. : 93 K pour YBa₂ Cu₃ O_{6.9}), il a été envisagé de réaliser des amenées de courant mixtes, comprenant un supraconducteur entre la très basse température (ex : 4.2 K) et une température intermédiaire (ex : 77 K, température de l'azote liquide), complété par un conducteur métallique entre la température intermédiaire et la température ambiante.

La céramique supraconductrice présente en effet l'avantage de ne pas produire de chaleur par effet Joule en régime continu, et d'en produire très peu sous certaines conditions en régime variable. Cet avantage est associé à une faible conductivité thermique.

La publication "YBaCuO current lead for liquid helium temperature applications" - F. Grivon et al - 1990 Applied Superconductivity Conference - Snowmass Colorado - 24 à 28 septembre 1990, décrit un exemple d'amenée de courant, où l'on utilise une pièce en YBaCuO en forme de barreau ou de tube.

Par exemple, l'utilisation d'un barreau de céramique de section égale à 20 mm2 et de longueur égale à 10 cm, transportant 1000A, pourrait être envisagée. Celui-ci dissiperait environ 0,2 W dans l'hélium, compensés par une consommation de 100 W électriques d'un réfrigérateur d'hélium. Il s'y ajouterait la charge de refroidissement de l'amenée de courant métallique entre 77 K et 300 K, représentant environ 400 W électriques. Une telle solution apparaît donc très avantageuse par rapport à l'amenée de courant métallique entre 4.2 K et 300 K évoquée précédemment.

Un assemblage de barreaux massifs en céramique supraconductrice HTc, a également été réalisé conformément à l'article J.L. Wu et al et J.R. Hull et al - 1990 - Applied Superconductivity Conference - Snowmass Colorado - 24 à 28 septembre 1990.

Dans les réalisations précédentes, les amenées de courant sont étudiées au cas par cas et les problèmes de l'isolation électrique, des étanchéités, du refroidissement, ne sont pas traités au niveau de l'amenée de courant proprement dite, mais au niveau de l'ensemble de l'installation à laquelle elle appartient. Ainsi, le refroidissement de l'amenée de courant par les vapeurs d'hélium suppose une étude globale de cette installation.

La présente invention a pour but de réaliser une structure pour amenée de courant, susceptible d'être produite en série, sous forme d'un composant pouvant être adapté à une grande variété d'installations, permettant d'assurer avec très peu de pertes le transport du courant entre la zone à très basse température (par exemple 4.2 K) et la zone à température intermédiaire (par exemple 77 K).

La présente invention a pour objet une structure pour amenée de courant destinée à une installation fonctionnant à très basse température, comprenant une pièce allongée en céramique supraconductrice à haute température critique, dont les deux extrémités sont destinées à être respectivement au contact d'un premier milieu à ladite très basse température et d'un second milieu à température intermédiaire, caractérisée par le fait que ladite pièce est munie auxdites deux extrémités de deux bornes métalliques bonnes conductrices du courant et de la chaleur sur lesquelles sont fixés de façon étanche deux éléments d'enveloppe ayant de faibles conductivités thermique et électrique, susceptibles d'être raccordés de manière que soit ménagé un vide d'isolation autour de ladite pièce supraconductrice.

Les deux bornes peuvent être aisément connectées, par exemple par soudure, d'une part à l'appareillage supraconducteur et d'autre part à une amenée de courant métallique entre la température intermédiaire et la température ambiante.

Selon une première variante de réalisation, les deux éléments d'enveloppe sont réalisés en un métal présentant de faibles conductivités électrique et thermique, et de bonnes caractéristiques mécaniques, comme l'acier inox 304 L. Lesdits éléments sont brasés sur les bornes métalliques avant la réalisation du contact céramique supraconductrice-bornes, pour éviter un échauffement préjudiciable de la céramique supraconductrice. Les deux éléments d'enveloppe sont réunis ensuite entre eux par une soudure étanche. L'espace compris entre l'enveloppe ainsi fermée et la pièce supraconductrice peut être partiellement rempli d'un super-isolant. On réalise alors le vide dans l'enveloppe à l'aide d'un orifice muni d'un tube que l'on queusote après pompage. On a ainsi réalisé un composant fini, utilisable dans des configurations très diverses.

Le problème posé par les rétreints différentiels et autres sources de contraintes est réduit grâce à la présence de l'enveloppe métallique qui peut présenter à la fois une certaine tenue mécanique et une certaine souplesse, ajustable selon l'épaisseur et la forme de sa paroi.

Cette forme peut être très variée. La paroi peut-être au moins partiellement ondulée, ce qui lui confère une capacité de déformation importante et allonge les chemins de conduction de la chaleur entre les deux bornes.

La structure pour amenée de courant selon l'invention constitue un composant compact qui peut transporter du courant avec de très faibles pertes entre sa borne à très basse température, par exemple immergée dans un bain d'hélium liquide à 4.2 K, et sa borne à la température intermédiaire, par exemple immergée dans un bain d'azote liquide à 77 K.

Elle ne nécessite pas de refroidissement interne et n'est refroidie que par conduction à sa borne située dans le milieu à très basse température, ce qui apporte une importante simplification technologique, par rapport aux dispositifs refroidis par des vapeurs. En particulier elle accepte toute inclinaison et peut être montée dans les situations les plus variées.

Comme elle n'est pas refroidie par des vapeurs, l'amenée de courant selon l'invention s'adapte particulièrement bien aux installations fonctionnant en "réfrigérateur" c'est-à-dire dans lesquelles une machine cryogénique liquéfie les vapeurs récupérées à très basse température. C'est par exemple le cas pour les appareillages supraconducteurs fonctionnant à 50 ou 60 Hz qui évaporent un débit d'hélium excédentaire.

Selon une deuxième variante de réalisation, plus adaptée au cas où l'amenée de courant doit traverser les parois métalliques d'un cryostat sans compromettre l'étanchéité et l'isolation électrique, les éléments d'enveloppe sont constitués en céramique isolante ; leur liaison étanche avec les bornes métalliques est assurée par un traitement approprié connu en soi, avant la réalisation des contacts céramique supraconductrice-bornes.

Après mise en place de la céramique supraconductrice et éventuellement d'un super-isolant, les deux éléments d'enveloppe en céramique isolante peuvent être réunis par une paroi métallique intermédiaire qui améliore la tenue mécanique et permet ultérieurement des liaisons par soudure avec le cryostat. La paroi métallique intermédiaire est de préférence perforée ; ceci permet de réaliser après montage un vide d'isolation commun aux parois métalliques du cryostat et à l'amenée de courant selon l'invention et de minimaliser autant que possible la conduction thermique.

A la limite, les éléments d'enveloppe en céramique isolante ne sont pas raccordés entre eux directement par une paroi métallique intermédiaire. Mais ils sont munis chacun d'un collier métallique soudé de manière étanche à la paroi correspondante du cryostat.

Selon une autre variante de réalisation, la paroi extérieure de l'élément d'enveloppe à ladite température intermédiaire présente un logement formant un réservoir de fluide cryogénique en contact thermique avec la borne correspondante.

D'autres caractéristiques et avantages de la présente invention apparaîtront au cours de la description suivante de modes de réalisation donnés à titre illustratif mais nullement limitatif. Dans le dessin annexé :
- La figure 1 est une vue schématique en coupe partielle d'un exemple de structure pour amenée de courant selon l'invention,
- La figure 2 est une vue schématique en coupe partielle d'un autre exemple de structure pour amenée de courant selon l'invention, destinée à traverser les parois d'un cryostat,
- La figure 3 montre partiellement une variante de la structure d'amenée de courant selon la figure 2,
- La figure 4 est une vue schématique en coupe partielle d'un autre exemple de structure pour amenée de courant selon l'invention, incorporant un réservoir d'azote liquide,
- La figure 5 est une vue très schématique d'un cryostat muni des amenées de courant correspondant aux variantes des figures 2, 3, 4.

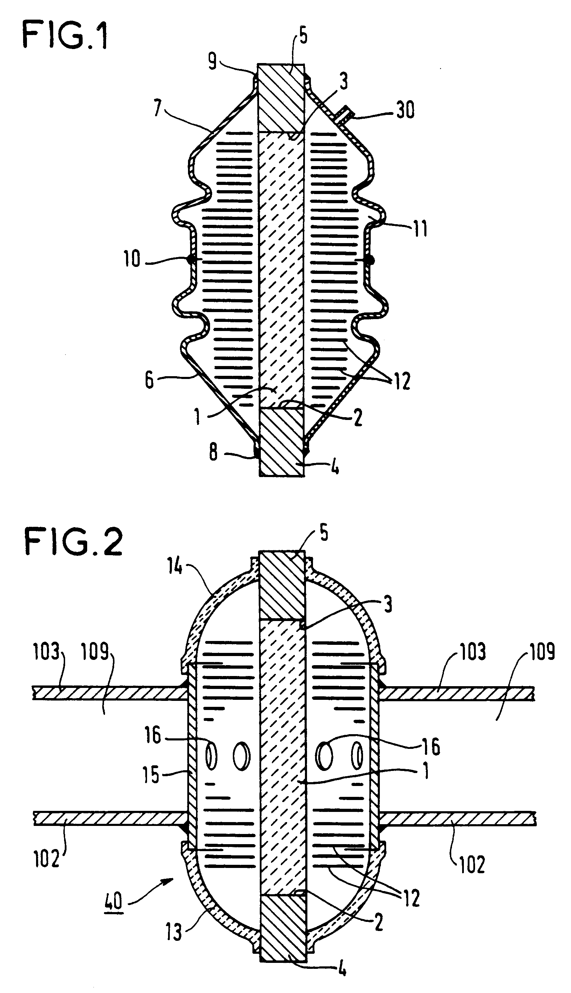

On voit dans la figure 1 une pièce allongée, telle qu'un barreau 1 de longueur comprise entre quelques centimètres et quelques dizaines de centimètres, en céramique supraconductrice à haute température critique, de type YBaCuO, dont les deux extrémités 2 et 3 sont liées à deux bornes métalliques 4 et 5 bonnes conductrices du courant et de la chaleur, par exemple en cuivre. Les contacts entre les extrémités 2 et 3 et les deux bornes 4 et 5 sont réalisés par exemple par la méthode décrite dans l'article de F. Grivon et al précité.

L'extrémité 2 et la borne 4 sont destinées à être au contact d'une zone à très basse température (4.2 K), tandis que l'extrémité 3 et la borne 5 sont destinées à être au contact d'une zone à température intermédiaire (77 K).

Deux éléments d'enveloppe métalliques minces 6 et 7, éventuellement ondulée, de faible conductivité thermique, et de préférence non magnétique, par exemple en acier inox 304 L ou 316 L, sont brasés sur les bornes 4 et 5 suivant des régions référencées 8 et 9, et soudés l'un à l'autre suivant la ligne référencée 10. Ils définissent autour du barreau 1 et d'une partie des bornes 4 et 5 un espace 11 où l'on fait le vide à l'aide d'un tube annexe 30 ultérieurement queusoté. On peut prévoir dans cet espace un ensemble de disques gaufrés 12 en super-isolant, par exemple des feuillets de Mylar aluminisés sur leurs deux faces, disposés orthogonalement au barreau 1.

La borne 4 est par exemple immergée dans un bain d'hélium liquide.

L'isolation électrique d'une telle structure peut être réalisée par des techniques conventionnelles ; ainsi les éléments d'enveloppe 6, 7 peuvent être fixés dans le reste de l'installation par l'intermédiaire de supports en téflon, résine époxy, verre, céramique ou analogue.

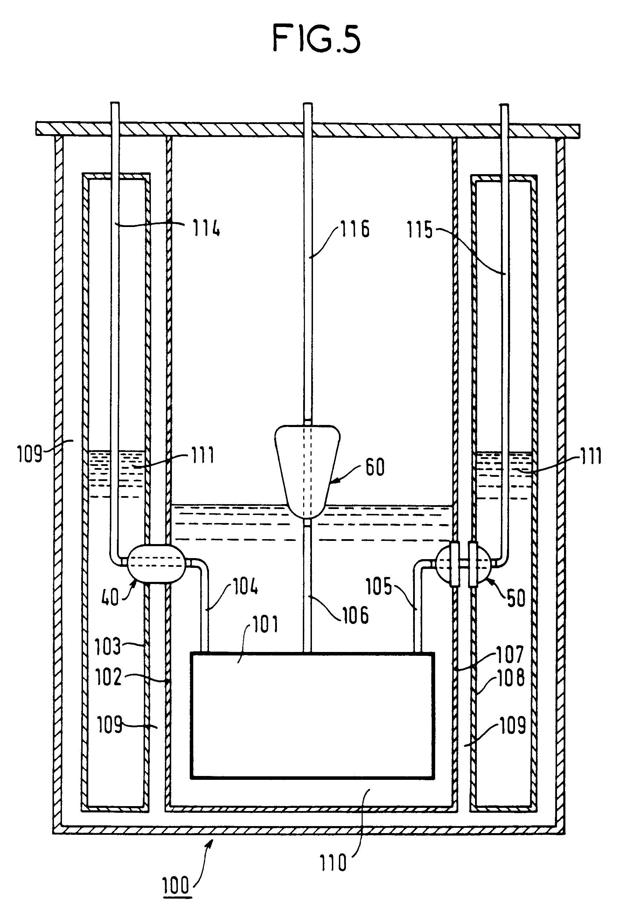

Les variantes de structures pour amenée de courant selon l'invention qui vont être décrites ci-après sont référencées 40, 50, 60 dans les figures 2, 3, 4 et apparaissent associées à un cryostat 100 dans la figure 5. Ce dernier contient un dispositif à alimenter 101 plongé dans un réservoir d'hélium liquide 110 dont on a référencé deux parois 102 et 107.

L'azote liquide 111 est contenu dans un réservoir dont les parois 103 et 108 sont isolées des parois 102 et 107 par le vide d'isolation dans l'espace 109.

Des connexions métalliques ou supraconductrices 104, 105, 106 se trouvant à 4.2 K sont reliées à des connexions métalliques 114, 115, 116 se trouvant à 77 K par l'intermédiaire des structures d'amenée de courant 40, 50, 60 selon l'invention.

Si on se reporte à la figure 2, on voit que la structure 40 comprend deux demi-coquilles en céramique isolante 13 et 14 en liaison étanche avec d'une part les bornes 4 et 5, et d'autre part une paroi métallique intermédiaire 15, éventuellement ondulée, et présentant des trous 16. Au montage, la paroi intermédiaire 15 est soudée aux parois métalliques 102 et 103 du cryostat, séparant les milieux à températures très basse et intermédiaire. Le vide d'isolement 109 est ainsi commun au cryostat 100 et à l'amenée de courant selon l'invention. Le super-isolant 12 peut être disposé comme dans la figure 1.

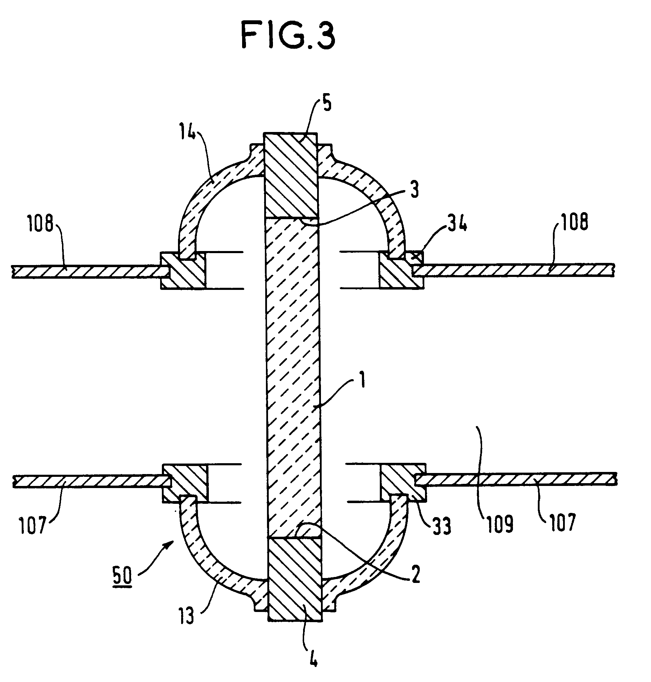

Dans la figure 3 où est illustrée la variante de structure 50 selon l'invention, on voit que les deux demi-coquilles en céramique 13 et 14 sont munies de colliers métalliques 33, 34, soudés respectivement aux parois 102 et 103 du cryostat. Là encore, le vide d'isolement 109 est commun au cryostat 100 et à l'amenée de courant selon l'invention.

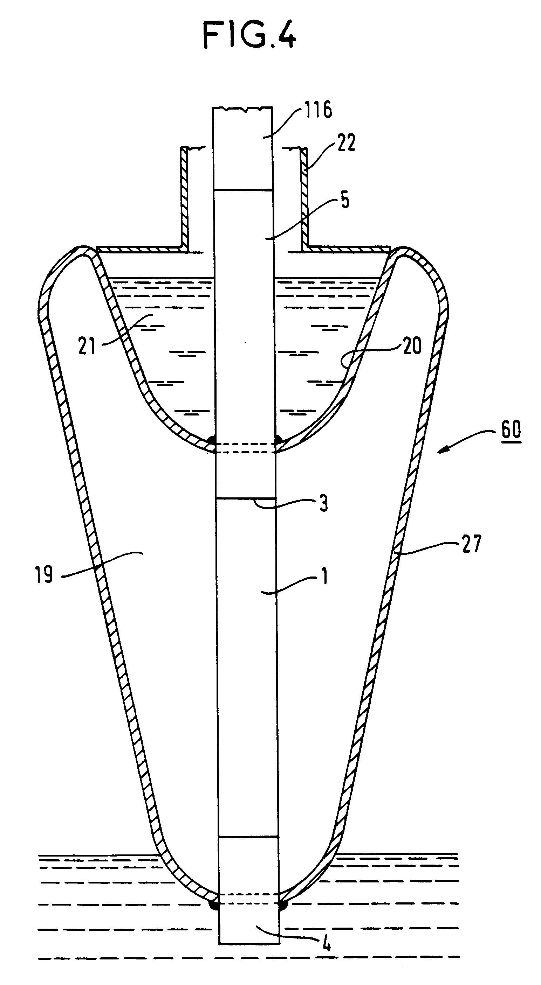

Dans la variante 60 représentée par la figure 4, l'extrémité 5 de l'amenée de courant travaillant à température intermédiaire a une géométrie appropriée pour une intégration aisée au système. On a une enveloppe 27 en métal ou en céramique qui entoure complètement le barreau 1 comme dans la variante de la figure 1. La partie supérieure de cette enveloppe délimite un espace 20 isolé par le vide 19, susceptible de recevoir le fluide cryogénique à température intermédiaire 21. Au montage, un tube 22 délimite l'espace dans lequel circulent les vapeurs dudit fluide, qui refroidissent la connexion métallique 116 de l'amenée de courant.

Il est encore possible, pour minimiser les pertes de l'amenée de courant, de donner à la céramique supraconductrice une section variable, de sorte que le courant critique, fonction de la section, et des valeurs locales de la température et du champ magnétique, ait partout à peu près la même valeur. Ceci conduit généralement à une section décroissante vers les basses températures.

L'invention n'est pas limitée aux modes de réalisation qui viennent d'être décrits, on pourra dans le cadre des revendications remplacer tout moyen par un moyen équivalent.

## Revendications

1. Structure pour amenée de courant destinée à une installation fonctionnant à très basse température, comprenant une pièce allongée en céramique supraconductrice à haute température critique, dont les deux extrémités sont destinées à être respectivement au contact d'un premier milieu à ladite très basse température et d'un second milieu à température intermédiaire, caractérisée par le fait que ladite pièce (1) est munie auxdites deux extrémités (2, 3) de deux bornes métalliques (4, 5) bonnes conductrices du courant et de la chaleur sur lesquelles sont fixés de façon étanche deux éléments d'enveloppe ayant de faibles conductivités thermique et électrique, susceptibles d'être raccordés de manière que soit ménagé un vide d'isolation (11) autour de ladite pièce supraconductrice.

2. Structure selon la revendication 1, caractérisée par le fait que lesdits deux éléments (6, 7) sont métalliques et raccordés entre eux par une soudure étanche (10).

3. Structure selon la revendication 2, caractérisée par le fait que lesdits éléments métalliques (6, 7) sont aux moins partiellement ondulés.

4. Structure selon la revendication 1, caractérisée par le fait que lesdits deux éléments d'enveloppe (13, 14) sont en céramique isolante.

5. Structure selon la revendication 4, caractérisée par le fait que lesdits deux éléments en céramique (13, 14) sont raccordés entre eux par une paroi métallique intermédiaire (15) éventuellement perforée (16).

6. Structure selon la revendication 1, caractérisée par le fait que la paroi extérieure de l'élément d'enveloppe (27) à ladite température intermédiaire présente un logement (20) formant un réservoir de fluide cryogénique en contact thermique avec la borne correspondante.

7. Structure selon la revendication 1, caractérisée par le fait que ladite pièce en céramique supraconductrice est entourée d'un super-isolant (12).

8. Structure selon la revendication 7, caractérisée par le fait que ledit super-isolant se trouve sous la forme d'un empilement de disques gaufrés, disposés orthogonalement à ladite pièce en céramique supraconductrice.

## Claims

1. A current lead structure designed for an installation operating at a very low temperature, said structure including an elongate part made of a high critical temperature superconductive ceramic and having its ends designed to be respectively in contact with a first medium at said very low temperature and with a second medium at an intermediate temperature, said structure being characterized by the fact that the ends (2, 3) of said part (1) are equipped with two respective metal terminals (4, 5) which are good conductors both of current and of heat, and to which are fixed in fluid-tight manner two respective jacket members which are poor conductors both of current and of heat, and which are suitable for being coupled together such that an insulating vacuum (11) is provided around said superconductive part.

2. A structure according to claim 1, characterized by the fact that said two members (6, 7) are made of metal and are coupled together by a fluid-tight weld (10).

3. A structure according to claim 2, characterized by the fact that at least part of each of said metal members (7, 8) is corrugated.

4. A structure according to claim 1, characterized by the fact that said two jacket members (13, 14) are made of an insulating ceramic.

5. A structure according to claim 4, characterized by the fact that said two ceramic members (13, 14) are coupled together via an intermediate metal wall (15) which is optionally perforated (16).

6. A structure according to claim 1, characterized by the fact that the outside wall of that jacket member (27) which is at said intermediate temperature has a recess (20) forming a tank for cryogenic fluid in thermal contact with the corresponding terminal.

7. A structure according to claim 1, characterized by the fact that said superconductive ceramic part is surrounded by a super-insulator (12).

8. A structure according to claim 7, characterized by the fact that said super-insulator is in the form of a stack of embossed wafers disposed orthogonally to said superconductive ceramic part.

## Patentansprüche

1. Struktur für eine Stromzuführung, die für eine Anlage bestimmt ist, welche bei sehr niedriger Temperatur arbeitet und ein langgestrecktes Bauteil aus supraleitender Keramik mit hoher kritischer Temperatur aufweist, dessen beide Enden mit einem ersten Medium bei der sehr tiefen Temperatur bzw. einem zweiten Medium bei Zwischentemperatur in Kontakt treten sollen, dadurch gekennzeichnet, daß das Bauteil (1) an den beiden Enden (2, 3) mit zwei metallischen Anschlüssen (4, 5) versehen ist, die gute Strom- und Wärmeleiter sind und an denen zwei Hüllenelemente dicht befestigt sind, die eine niedrige Wärme- und elektrische Leitfähigkeit besitzen und so angeschlossen werden können, daß um das supraleitende Bauteil herum ein Isolationsvakuum (11) herrscht.

2. Struktur nach Anspruch 1, dadurch gekennzeichnet, daß die beiden Elemente (6, 7) metallisch sind und miteinander durch eine dichte Schweißung (10) verbunden sind.

3. Struktur nach Anspruch 2, dadurch gekennzeichnet, daß die metallischen Elemente (6, 7) mindestens teilweise gewellt sind.

4. Struktur nach Anspruch 1, dadurch gekennzeichnet, daß die beiden Hüllenelemente (13, 14) aus Isolierkeramik sind.

5. Struktur nach Anspruch 4, dadurch gekennzeichnet, daß die beiden keramischen Hüllenelemente (13, 14) miteinander durch eine metallische Zwischenwand (15) verbunden sind, die eventuell Perforationen (10) aufweist.

6. Struktur nach Anspruch 1, dadurch gekennzeichnet, daß die äußere Wand des Hüllenelements (27) bei der Zwischentemperatur einen Aufnahmeraum (20) aufweist, der einen Speicher für das Tiefsttemperaturfluid bildet, das in thermischem Kontakt mit dem entsprechenden Anschluß steht.

7. Struktur nach Anspruch 1, dadurch gekennzeichnet, daß das supraleitende keramische Bauteil von einem Superisolator (12) umgeben ist.

8. Struktur nach Anspruch 7, dadurch gekennzeichnet, daß der Superisolator von einem Stapel geprägter Scheiben gebildet ist, die orthogonal zum supraleitenden Bauteil aus Keramik angeordnet sind.
